# EUROPEAN PATENT APPLICATION

(11) **EP 4 759 128 A1**
(43) Date of publication of application: **17.06.2026**
(21) Application number: 25222516.4
(22) Date of filing: 11.12.2025
(51) Int. Cl.: A01G 9/08, A23N 15/08, A23N 15/00, A01G 22/35

(54) **ARRANGING FLOWER BULBS AT A PITCH DISTANCE IN A MOVING ROW OF FLOWER BULBS**

(30) Priority: 13.12.2024 NL 2039346
(71) Applicant: Brom Mechatronica B.V., 5554 GM Valkenswaard (NL)
(72) Inventor: van de Gevel, Nick Franciscus, Valkenswaard (NL); Brom, Michiel Petrus Johannes Maria, Valkenswaard (NL); Keeris, Willem Robert Jan, Valkenswaard (NL)
(74) Representative: Dekker-Garms, Alwine Emilie

(57) **Abstract**

In the field of handling flower bulbs (10), a method of converting a continuous input flow of flower bulbs (10) moving in a row in which the flower bulbs (10) are arranged one after another to a continuous output flow of the flower bulbs (10) moving in a row in which the flower bulbs (10) are arranged at a pitch distance is provided. Creating the continuous output flow is done by means of at least one pair (20) of bulb separator components (21, 22) which are inserted between two adjacent flower bulbs (10) and which are operated to subsequently move the flower bulbs (10) apart. In the process, movement of a front bulb separator component (21) is accelerated relative to movement of a back bulb separator component (22). As an advantageous result, the input flow of the flower bulbs (10) is not hindered in any way.

## Description

The invention relates to a method of arranging flower bulbs. Further, the invention relates to a bulb positioning device configured to carry out the method, and also relates to a bulb processing line including the bulb positioning device and a bulb sorting arrangement comprising a bulb inspection device and a bulb discharge device having at least two different discharge positions.

The invention is in the field of handling flower bulbs such as lily bulbs. In general, in the field of handling flower bulbs, quite a number of actions to which the flower bulbs can be subjected are performed by hand. In this respect, an example of an action that is often performed by a person rather than a machine is sorting the flower bulbs according to one or more criteria. Sorting flower bulbs is done to separate one type of flower bulb from another, and may involve separating useful flower bulbs from useless flower bulbs, or making collections of flower bulbs of different quality and/or size. It is known to use X ray technology or image processing technology for the purpose of inspecting flower bulbs, but applying such technology for sorting flower bulbs in a commercially beneficial process has proven to be difficult. In view thereof, it is an object of the invention to enable supply of flower bulbs one after another to a device such as an X ray inspection device or a visual inspection device in a continuous flow and at an appropriate interval and speed, such that commercial application of such a device can be realized after all.

The invention provides a method of arranging flower bulbs in a row of flower bulbs moving through a bulb positioning device comprising at least one pair of bulb separator components which are movable in the bulb positioning device, wherein the flower bulbs are arranged one after another in an input flow to the bulb positioning device, and wherein the method comprises:
- inserting the bulb separator components between two adjacent flower bulbs and moving the bulb separator components in a direction of movement of the flower bulbs, wherein one bulb separator component is a front bulb separator component and the other bulb separator component is a back bulb separator component as seen in the direction of movement,
- accelerating movement of the front bulb separator component relative to movement of the back bulb separator component to thereby enlarge a distance between the two adjacent flower bulbs, and
- removing the bulb separator components from between the two adjacent flower bulbs.

Further, the invention provides a bulb positioning device configured to carry out the method as defined here before on an input flow of flower bulbs in which the flower bulbs are arranged one after another, the bulb positioning device comprising at least one pair of bulb separator components which are movable in the bulb positioning device, and further comprising a drive system configured to drive the bulb separator components and a control system in communication with the drive system, wherein the control system is configured to control the drive system to:
- insert the bulb separator components between two adjacent flower bulbs and move the bulb separator components in a direction of movement of the flower bulbs, wherein one bulb separator component is a front bulb separator component and the other bulb separator component is a back bulb separator component as seen in the direction of movement,
- accelerate movement of the front bulb separator component relative to movement of the back bulb separator component to thereby enlarge a distance between the two adjacent flower bulbs, and
- remove the bulb separator components from between the two adjacent flower bulbs.

It follows from the foregoing that the invention involves use of at least one pair of bulb separator components in a context of a moving row of flower bulbs in which the flower bulbs are arranged one after another, wherein the bulb separator components are inserted between two adjacent flower bulbs and moved in a direction of movement of the flower bulbs, and wherein movement of a front bulb separator component is accelerated relative to movement of a back bulb separator component to thereby enlarge a distance between the two adjacent flower bulbs. In this way, it is possible to have a continuous supply and flow of flower bulbs, to maintain a certain speed of advancement of the flower bulbs, and yet to position the flower bulbs at a distance from each other, wherein it is possible for said distance to be practically constant between different sets of two adjacent flower bulbs, i.e. sets of a front flower bulb and a back flower bulb as seen in the direction of movement. By moving the front flower bulb forward at a temporary higher/increasing speed, the front flower bulb and the back flower bulb are pulled apart, wherein an advantageous additional function of the back bulb separator component can be obtained if the design of the back bulb separator component is suitable to perform a retaining action on the back flower bulb, to prevent the back flower bulb from being pulled along with the front flower bulb in case roots of the flower bulbs are entangled. Information about the position of respective flower bulbs in an input flow can be obtained by means of a visual detection system, i.e., a detection system which is configured to create an image of the input flow of the flower bulbs, and to detect in the image the individual flower bulbs. In that case, the right place and the right time for inserting the bulb separator components between two adjacent flower bulbs are found by processing the information from the detection system. A feasible example of an input flow of the flower bulbs is an input flow in which the flower bulbs are arranged close to each other, at a distance with is smaller than the pitch distance to be set by means of the bulb separator components, or are even arranged against each other, possibly with their roots entangled as suggested here before.

Advantageously, the back bulb separator component is moved at substantially constant speed during the time that the back bulb separator component is positioned between the two adjacent flower bulbs. It is practical if this speed is the same as the general speed of the row of flower bulbs, which can be realized by coupling movement of the back bulb separator component to movement of a means for transporting the row of flower bulbs through the bulb positioning device, such as a conveyor belt.

The invention covers an option of moving a first one of the bulb separator components between the two adjacent flower bulbs in a first instance and moving a second one of the bulb separator components between the two adjacent flower bulbs and against the first one of the bulb separator components in a second instance. In a practical embodiment of the bulb positioning device, the first one of the bulb separator components can be the front bulb separator component and the second one of the bulb separator components can be the back bulb separator component. This is especially the case if the bulb separator components are moved to a position where insertion between the two adjacent flower bulbs is initiated from a position which is behind the flower bulbs as seen in the direction of movement, which is advantageous because a direction in which the bulb separator components are moved does not need to be varied in that situation.

In the context of the invention, various designs of the bulb separator components are feasible, wherein it is advantageous if a design enables smooth insertion of the bulb separator components between two adjacent flower bulbs, with a minimal risk of damage to the flower bulbs. In this respect, it is practical if each of the bulb separator components comprises an assembly of arms which are movable towards each other to decrease a space between them and away from each other to increase a space between them, wherein each of the bulb separator components is moved between the two adjacent flower bulbs in an open configuration in which the arms are spaced apart to an initial extent, and wherein the bulb separator components are subsequently put to a closed configuration in which the arms are spaced apart to a lesser extent. According to an insight of the invention, if the bulb separator components are of such a design, indeed, it is advantageous if the bulb separator components are simultaneously put to the closed configuration at the moment the second of the bulb separator components is placed against the first of the bulb separator components, on the basis of mechanical interaction of the bulb separator components. The fact is that in this way, a complex, bulky and/or costly mechanism for performing the function of putting the bulb separator components to the closed configuration at the right time can be omitted. For example, it is possible that each of the bulb separator components is of a design in which the bulb separator component is biased to the closed configuration, such as by means of a spring arrangement, and in which the bulb separator is further equipped with a mechanism which enables releasably retaining the bulb separator component in the open configuration and which is configured to be activated to release the bulb separator component when the bulb separator component abuts against another bulb separator component.

In a practical embodiment, the bulb positioning device according to the invention comprises a guide unit arranged above a bulb area where the row of flower bulbs moves through the bulb positioning device during operation, wherein the guide unit is configured to guide the bulb separator components along an appropriate track such as a triangular track comprising a lowest track portion in which the bulb separator components are moved in a substantially horizontal direction, along with the row of flower bulbs, a first oblique track portion in which the bulb separator components are moved in an upward direction towards a top position, and a second oblique track portion in which the bulb separator components are moved in a downward direction from the top position. In such a case, it is possible that the drive system of the bulb positioning device comprises at least two motor-driven chains which are movable in the guide unit along the triangular track, and that the bulb separator components are coupled to the respective chains.

All in all, when the invention is put to practice, it is possible to enlarge a distance between two adjacent flower bulbs in successive sets of two adjacent flower bulbs so that a row of flower bulbs in which the flower bulbs are at a pitch distance is created. As explained earlier, such a row of flower bulbs is very well suitable to be moved to a device for inspecting the flower bulbs so that a destination of each of the flower bulbs can be decided according to chosen criteria. In view thereof, the invention also relates to a bulb processing line including the bulb positioning device and a bulb sorting arrangement comprising a bulb inspection device and a bulb discharge device having at least two different discharge positions.

For the purpose of enabling the bulb positioning device to handle a large volume of flower bulbs at a high speed, and to realize a continuous process of setting a distance between two adjacent flower bulbs, it is advantageous if the bulb positioning device comprises at least two pairs of bulb separator components. Generally speaking, the number of pairs of bulb separator components can be chosen such that always one of the pairs is available to pull two adjacent flower bulbs apart while the at least one other of the pairs is returned to a starting position of such action, or is already at that position.

The above-described and other aspects of the invention will be apparent from and elucidated with reference to the following detailed description of a practical embodiment of a bulb positioning device.

The invention will now be explained in greater detail with reference to the figures, in which equal or similar parts are indicated by the same reference signs, and in which:
Figure 1 diagrammatically shows a perspective view of an assembly of components of a bulb positioning device according to an embodiment of the invention,
Figure 2 diagrammatically shows a side view of the assembly of components,
Figure 3 illustrates an input flow of flower bulbs to the bulb positioning device and an output flow of flower bulbs from the flower bulb device,
Figures 4 and 5 diagrammatically show a bulb separator component of the bulb positioning device and a portion of a carrier rod of the bulb separator component, wherein figure 5 is a partially sectional view, and
Figure 6 diagrammatically shows a bulb processing line including the bulb positioning device, a device for supplying flower bulbs to the bulb positioning device, and a bulb sorting arrangement comprising a bulb inspection device and a bulb discharge device.

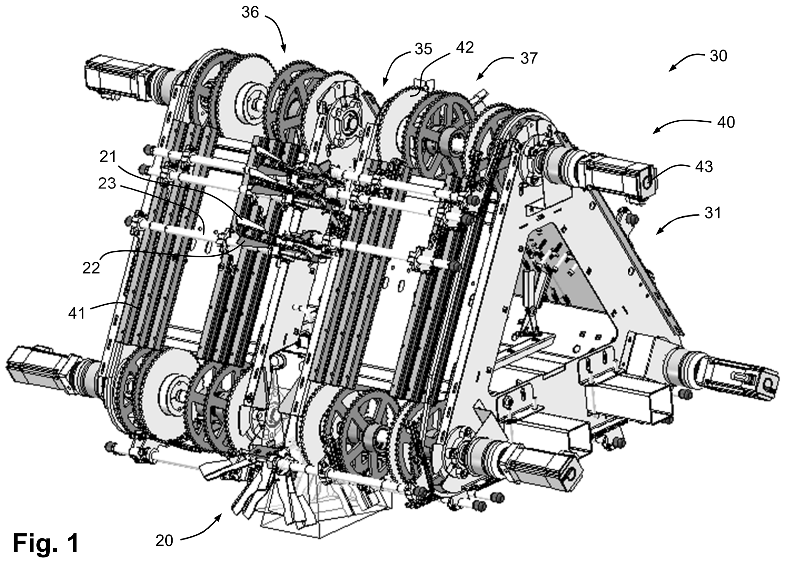

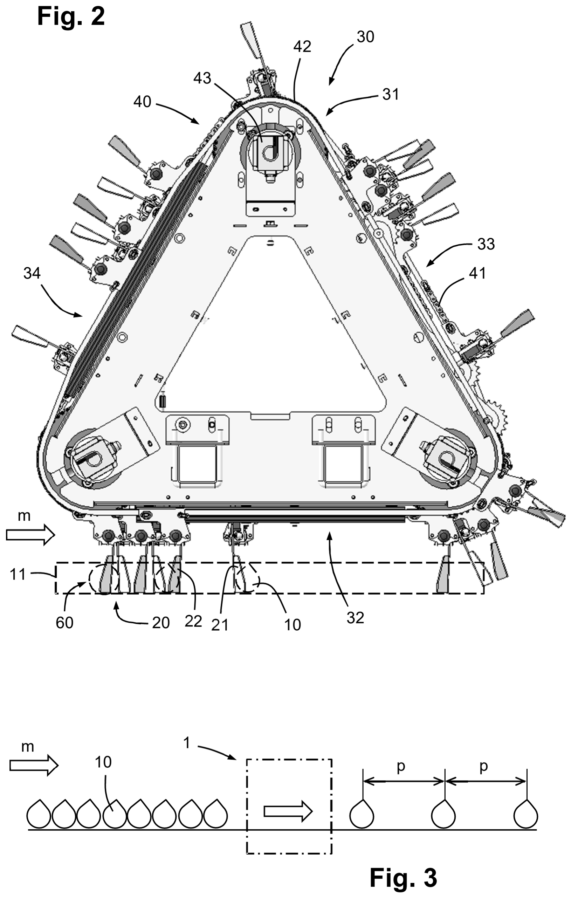

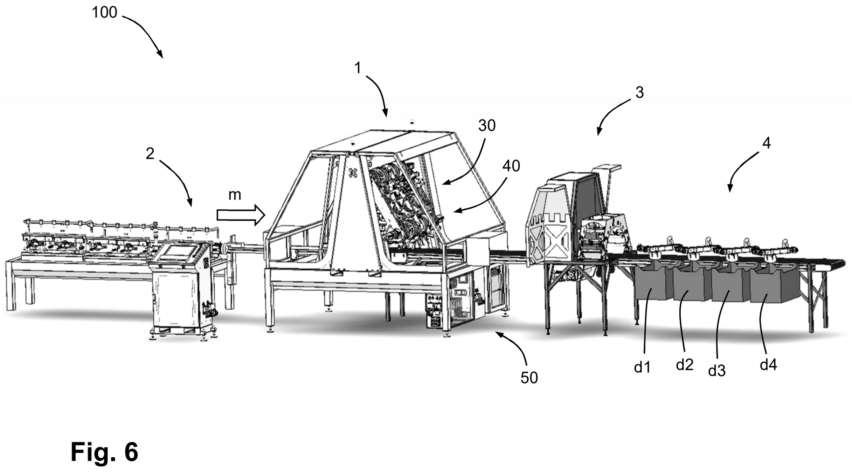

Figures 1 and 2 show an assembly of components of a bulb positioning device 1 according to an embodiment of the invention, and figure 6 illustrates application of the bulb positioning device 1 in a bulb processing line 100. The bulb positioning device 1 is designed to receive and to output flower bulbs 10 such as lily bulbs in a continuous flow, and to manipulate the flower bulbs 10 to thereby realize an output flow of the flower bulbs 10 in which the flower bulbs 10 move at a defined speed and are at a pitch distance p from each other in a row.

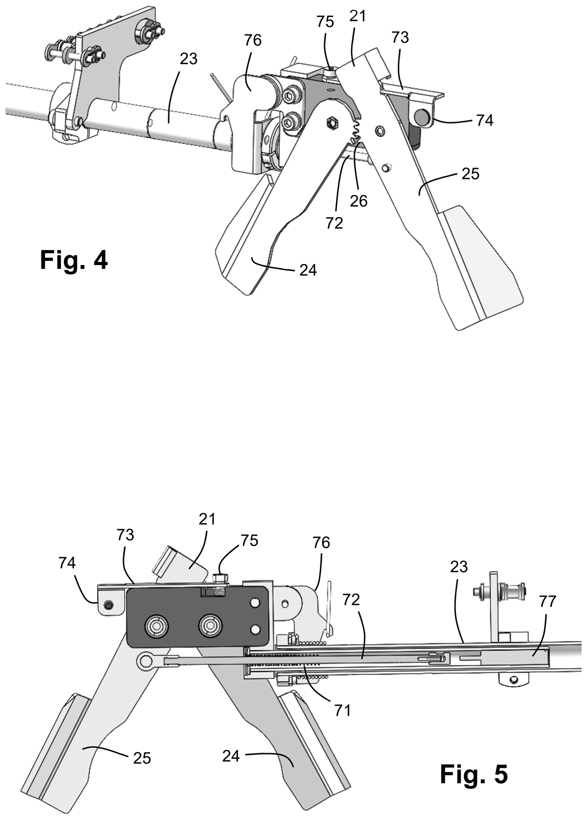

For the purpose of positioning the flower bulbs 10 as desired, the bulb positioning device 1 is equipped with pairs 20 of bulb separator components 21, 22. One bulb separator component 21, 22 is separately shown in figures 4 and 5. The bulb separator components 21, 22 run on a guide unit 30 of generally triangular shape. The guide unit 30 is arranged above a bulb area 11 where a row of flower bulbs 10 moves through the bulb positioning device 1 during operation. In figure 2, the bulb area 11 is diagrammatically indicated in dashed lining, and also, two flower bulbs 10 are diagrammatically depicted in dashed lining.

During operation of the bulb positioning device 1, the guide unit 30 functions to guide the bulb separator components 21, 22 along a triangular track 31 comprising a lowest track portion 32 in which the bulb separator components 21, 22 are moved in a substantially horizontal direction, along with the row of flower bulbs 10, a first oblique track portion 33 in which the bulb separator components 21, 22 are moved in an upward direction towards a top position, and a second oblique track portion 34 in which the bulb separator components 21, 22 are moved in a downward direction from the top position. A direction of movement m is indicated by means of an arrow in figures 2, 3 and 6. Each of the bulb separator components 21, 22 is arranged at an end of a carrier rod 23 which is supported on a set of chains 41 which are movable in the guide unit 30 along the triangular track 31, at a distance from each other so as to have good stability of the carrier rod 23. In the present example, the pairs 20 of bulb separator components 21, 22 are provided in four groups of three pairs 20, and the guide unit 30 comprises a middle section 35 and two side sections 36, 37, wherein the pairs 20 of bulb separator components 21, 22 are located at the middle section 35, and wherein each of the side sections 36, 37 is equipped with three sets of chains 41. In each group of three pairs 20 of bulb separator components 21, 22, a first bulb separator component 21 of the respective pairs 20 is coupled to another of the three sets of chains 41 which are present on one of the side sections 36, 37 of the guide unit 30, while a second bulb separator component 22 of the respective pairs 20 is coupled to another of the three sets of chains 41 which are present on the other of the side sections 36, 37 of the guide unit 30. In this way, there is freedom of movement of each of the six bulb separator components 21, 22 of a group, which enables independent and accurate setting of a position of separator components 21, 22 in the lowest track portion 32 of the triangular track 31.

The respective chains 41 are part of a drive system 40 of the bulb positioning device 1, which drive system 40 further comprises gear wheels 42 for guiding the chains 41 and servo motors 43 for driving the gear wheels 42. Controlling movement of each of the bulb separator components 21, 22 through controlling the drive system 40 is done by a control system 50 on the basis of information received from a detection system 60 comprising cameras or the like for creating an image of the flower bulbs 10 in an input flow to the bulb positioning device 1 and for detecting in the image features of the individual flower bulbs 10, wherein any suitable image processing techniques may be applied, possibly involving artificial intelligence. In this respect, a practical position of a camera is diagrammatically indicated in dashed lining in figure 2.

The input flow of flower bulbs 10 can be supplied to the bulb positioning device 1 in any suitable way, wherein any appropriate measures may be taken to eventually have a moving row of the flower bulbs 10. For example, at the end of a supply system, a gutter-like element may be used to create a single line of flower bulbs 10 and to release the flower bulbs 10 to a conveyor belt for transporting the flower bulbs 10 to the bulb positioning device 1. Further, control measures may be applied to ensure an appropriate speed of the line of the flower bulbs 10 and an appropriate filling degree of the flower bulbs 10 in the line, which may involve use of one or more cameras and/or sensors to inspect the line of the flower bulbs 10 and to provide feedback for realizing appropriate settings in the supply system, particularly speed settings so that the bulb handling capacity of the bulb positioning device 1 can be used in an optimal fashion. The input flow of the flower bulbs 10 is illustrated at the left side of figure 3, and the output flow in which the flower bulbs 10 are at the pitch distance p from each other is illustrated at the right side of figure 3. The way in which the bulb separator components 21, 22 are used to generate the output flow as desired is now described, wherein it is noted that each of the bulb separator components 21, 22 comprises an assembly of arms 24, 25 which are hingeable relative to each other so as to be able to set an open configuration of the separator component 21, 22 in which the arms are spaced apart to an initial extent and to set a closed configuration of the separator component 21, 22 in which the arms are spaced apart to a lesser extent.

During operation of the bulb positioning device 1, the detection system 60 continuously detects features of the flower bulbs 10 and provides information to the control system 50 about an insertion position which is a position between two adjacent flower bulbs 10. For example, the detection system 60 generates images of sides of the flower bulbs 10 which are a front side and a back side as seen in the direction of movement m. As the flower bulbs 10 move in the bulb area 11 at a general speed of movement, a first bulb separator component 21 of a pair 20 of bulb separator components 21, 22 is put to the insertion position by means of appropriate control of the speed of the chain 41 to which the bulb separator component 21 is coupled, which may particularly involve temporary acceleration. In the process, the bulb separator component 21 is in the open configuration so that the bulb separator component 21 is capable of overtaking the flower bulbs 10 until the insertion position is reached. Subsequently, a second bulb separator component 22 of the pair 20 of bulb separator components 21, 22 is put to the insertion position as well while being in the open configuration, and is made to abut against the first bulb separator component 21. In a way as will be explained later, as soon as abutment of the bulb separator components 21, 22 takes place, both bulb separator components 21, 22 are put to the closed configuration.

At the insertion position, the bulb separator components 21, 22 move at the general speed of movement, but as soon as the bulb separator components 21, 22 are in the closed configuration, movement of the first bulb separator component 21, which is a front bulb separator component 21 at that time, as seen in the direction of movement m, is accelerated relative to movement of the second bulb separator component 22, which is a back bulb separator component 22 at that time. As a result, a front flower bulb 10 is pushed forward relative to a back flower bulb 10 of the set of flower bulbs 10, while the back flower bulb 10 is blocked from following the accelerated movement of the front flower bulb 10 by means of the second bulb separator component 22. A distance between the flower bulbs 10 is enlarged until the pitch distance p is realized. At that point, the first bulb separator component 21 is put to the open configuration and the speed of movement of the front flower bulb 10 is back at the general speed of movement. The second bulb separator component 22 is put to the open configuration as well and is accelerated to move towards the first bulb separator component 21, and the process as described can be repeated by means of a trailing pair 20 of bulb separator components 21, 22, wherein the flower bulb 10 which was the back flower bulb 10 is the front flower bulb 10 in the subsequent process. Putting the respective bulb separator components 21, 22 to the open configuration may be done in any suitable way, such as through interaction with a cam-like element at an appropriate position in the bulb positioning device 1.

Figures 4 and 5 show the first bulb separator component 21 and a portion of the carrier rod 23 of the bulb separator component 21, wherein it is noted that these figures are equally representative of the second bulb separator component 22. With reference to figures 4 and 5, a way of simultaneously putting the bulb separator components 21, 22 to the closed configuration at the moment the second bulb separator component 22 is placed against the first bulb separator component 21 is explained. In the first place, with reference to figure 4, it is noted that in the present example, the respective arms 24, 25 of the first bulb separator component 21 hinge in a predetermined way relative to each other on the basis of an interaction of the arms 24, 25 through engagement of teeth 26, wherein movement of one of the arms 24, 25 automatically brings about movement of the other of the arms 24, 25. The carrier rod 23 is hollow, and the first bulb separator component 21 is biased towards the closed configuration by means of a coil spring 71 which is arranged inside the carrier rod 23 to act on a movable rod 72 which is hingeably coupled to the arm 25 furthest from the carrier rod 23. At the top of the first bulb separator component 21, a lever-like element 73 having an abutment plate 74 is arranged. In the open configuration of the first bulb separator component 21, the lever-like element 73 is in engagement with the arm 25 furthest from the carrier rod 23 as a result of which both arms 24, 25 are hinged to a maximum extent and the coil spring 71 is in a compressed configuration. The lever-like element 73 is biased about a hinging shaft 75 towards the engagement configuration as mentioned, such as by means of a spring. When the similar second bulb separator component 22 abuts against the first bulb separator component 21, a contact plate 76 of the second bulb separator component 22 abuts against the abutment plate 74 of the lever-like element 73 of the first bulb separator component 21 (and vice versa). In that instance, the lever-like element 73 is pushed to hinge about the hinging shaft 75 so that the engagement of the lever-like element 73 on the arm 25 furthest from the carrier rod 23 is lost and the arms 24, 25 are free to hinge towards each other under the influence of the coil spring 71. In particular, the coil spring 71 extends and thereby pulls the movable rod 72 inward, which causes the arms 24, 25 to hinge towards each other. A damping element 77 is present in the carrier rod 23 to dampen the closing movement of the bulb separator component 21, which is a measure aimed at preventing damage to the flower bulbs 10.

Figure 6 illustrates a feasible application of the bulb positioning device 1, which is an application in a bulb processing line 100 which further comprises a device 2 for supplying flower bulbs 10 to the bulb positioning device 1, and a bulb sorting arrangement comprising a bulb inspection device 3 and a bulb discharge device 4. By creating an output flow of flower bulbs 10 in which the flower bulbs 10 are arranged in a row at a pitch distance p, a flow of flower bulbs 10 is created which is exactly suitable to be used as an input flow of the bulb inspection device 3. An additional advantage is that the bulb positioning device 1 is configured to do so while allowing a continuous input flow of the flower bulbs 10 and not interfering with the continuous character of the flow, yet positioning the flower bulbs 10 at the pitch distance p. This enables a situation in which a maximum speed of the flower bulbs 10 through the bulb inspection device 3 is determined by characteristics of the bulb inspection device 3 alone and no other device in the bulb processing line 100.

In the shown example, the bulb discharge device 4 has four different discharge positions d1, d2, d3, d4. Depending on information about the flower bulbs 10 generated by the bulb inspection device 3, a flower bulb 10 is discharged to an appropriate one of those discharge positions d1, d2, d3, d4. The bulb inspection device 3 can be equipped with any suitable type of components for inspecting the flower bulbs 10, and the criteria on the basis of which the flower bulbs 10 are sorted can be chosen as appropriate. Examples of characteristics of the flower bulbs 10 which can used as criteria for sorting are size characteristics, the number of noses of the flower bulbs 10, and presence/absence of damaged areas on the flower bulbs 10.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Notable aspects of the invention can be summarized as follows. In the field of handling flower bulbs 10, a method of converting a continuous input flow of flower bulbs 10 moving in a row in which the flower bulbs 10 are arranged one after another to a continuous output flow of the flower bulbs 10 moving in a row in which the flower bulbs 10 are arranged at a pitch distance p is provided. The latter flow of the flower bulbs 10 is suitable to be supplied to a device configured to act on flower bulbs 10 on a one-by-one basis, such as a bulb inspection device 3. Creating such a flow is done by means of at least one pair 20 of bulb separator components 21, 22 which are inserted between two adjacent flower bulbs 10 and which are operated to subsequently move the flower bulbs 10 apart. In the process, movement of a front bulb separator component 21 is accelerated relative to movement of a back bulb separator component 22. As an advantageous result, the input flow of the flower bulbs 10 is not hindered in any way.

## Claims

1. Method of arranging flower bulbs (10) in a row of flower bulbs (10) moving through a bulb positioning device (1) comprising at least one pair (20) of bulb separator components (21, 22) which are movable in the bulb positioning device (1), wherein the flower bulbs (10) are arranged one after another in an input flow to the bulb positioning device (1), and wherein the method comprises:
- inserting the bulb separator components (21, 22) between two adjacent flower bulbs (10) and moving the bulb separator components (21, 22) in a direction of movement (m) of the flower bulbs (10), wherein one bulb separator component (21) is a front bulb separator component (21) and the other bulb separator component (22) is a back bulb separator component (22) as seen in the direction of movement (m),
- accelerating movement of the front bulb separator component (21) relative to movement of the back bulb separator component (22) to thereby enlarge a distance between the two adjacent flower bulbs (10), and
- removing the bulb separator components (21, 22) from between the two adjacent flower bulbs (10).

2. Method as claimed in claim 1, wherein the back bulb separator component (22) is moved at substantially constant speed during the time that the back bulb separator component (22) is positioned between the two adjacent flower bulbs (10).

3. Method as claimed in claim 1 or 2, wherein a first one of the bulb separator components (21, 22) is moved between the two adjacent flower bulbs (10) in a first instance and a second one of the bulb separator components (21, 22) is moved between the two adjacent flower bulbs (10) and against the first one of the bulb separator components (21, 22) in a second instance.

4. Method as claimed in any of claims 1-3, wherein each of the bulb separator components (21, 22) comprises an assembly of arms (24, 25) which are movable towards each other to decrease a space between them and away from each other to increase a space between them, wherein each of the bulb separator components (21, 22) is moved between the two adjacent flower bulbs (10) in an open configuration in which the arms (24, 25) are spaced apart to an initial extent, and wherein the bulb separator components (21, 22) are subsequently put to a closed configuration in which the arms (24, 25) are spaced apart to a lesser extent.

5. Method as claimed in claim 4 insofar as dependent on claim 3, wherein the bulb separator components (21, 22) are simultaneously put to the closed configuration at the moment the second of the bulb separator components (21, 22) is placed against the first of the bulb separator components (21, 22), on the basis of mechanical interaction of the bulb separator components (21, 22).

6. Method as claimed in any of claims 1-5, wherein the bulb positioning device (1) comprises a detection system (60), and wherein the method comprises determining an insertion position between two adjacent flower bulbs (10) by operating the detection system (60) to create an image of the input flow of the flower bulbs (10), and to detect in the image the individual flower bulbs (10).

7. Method as claimed in any of claims 1-6, wherein a distance between two adjacent flower bulbs (10) is enlarged in successive sets of two adjacent flower bulbs (10) so that a row of flower bulbs (10) in which the flower bulbs (10) are at a pitch distance (p) is created.

8. Bulb positioning device (1) configured to carry out the method as claimed in any of claims 1-7 on an input flow of flower bulbs (10) in which the flower bulbs (10) are arranged one after another, the bulb positioning device (1) comprising at least one pair (20) of bulb separator components (21, 22) which are movable in the bulb positioning device (1), and further comprising a drive system (40) configured to drive the bulb separator components (21, 22) and a control system (50) in communication with the drive system (40), wherein the control system (50) is configured to control the drive system (40) to:
- insert the bulb separator components (21, 22) between two adjacent flower bulbs (10) and move the bulb separator components (21, 22) in a direction of movement (m) of the flower bulbs (10), wherein one bulb separator component (21) is a front bulb separator component (21) and the other bulb separator component (22) is a back bulb separator component (22) as seen in the direction of movement (m),
- accelerate movement of the front bulb separator component (21) relative to movement of the back bulb separator component (22) to thereby enlarge a distance between the two adjacent flower bulbs (10), and
- remove the bulb separator components (21, 22) from between the two adjacent flower bulbs (10).

9. Bulb positioning device (1) as claimed in claim 8, wherein the control system (50) is configured to control the drive system (40) to move the back bulb separator component (22) at substantially constant speed during the time that the back bulb separator component (22) is positioned between the two adjacent flower bulbs (10).

10. Bulb positioning device (1) as claimed in claim 8 or 9, wherein the control system (50) is configured to control the drive system (40) to move a first one of the bulb separator components (21, 22) between the two adjacent flower bulbs (10) in a first instance and to move a second one of the bulb separator components (21, 22) between the two adjacent flower bulbs (10) and against the first one of the bulb separator components (21, 22) in a second instance.

11. Bulb positioning device (1) as claimed in any of claims 8-10, wherein each of the bulb separator components (21, 22) comprises an assembly of arms (24, 25) which are movable towards each other to decrease a space between them and away from each other to increase a space between them.

12. Bulb positioning device (1) as claimed in claim 11 insofar as dependent on claim 10, wherein the bulb separator components (21, 22) are configured to mechanically interact with each other at the moment the second of the bulb separator components (21, 22) is placed against the first of the bulb separator components (21, 22) to thereby both be put from an open configuration in which the arms (24, 25) are spaced apart to an initial extent to a closed configuration in which the arms (24, 25) are spaced apart to a lesser extent.

13. Bulb positioning device (1) as claimed in any of claims 8-12, comprising a detection system (60), wherein the control system (50) is in communication with the detection system (60) and configured to determine an insertion position between two adjacent flower bulbs (10) by operating the detection system (60) to create an image of the input flow of the flower bulbs (10), and to detect in the image the individual flower bulbs (10).

14. Bulb positioning device (1) as claimed in any of claims 8-13, comprising a guide unit (30) arranged above a bulb area (11) where the row of flower bulbs (10) moves through the bulb positioning device (1) during operation, wherein the guide unit (30) is configured to guide the bulb separator components (21, 22) along a triangular track (31) comprising a lowest track portion (32) in which the bulb separator components (21, 22) are moved in a substantially horizontal direction, along with the row of flower bulbs (10), a first oblique track portion (33) in which the bulb separator components (21, 22) are moved in an upward direction towards a top position, and a second oblique track portion (34) in which the bulb separator components (21, 22) are moved in a downward direction from the top position.

15. Bulb processing line (100) including the bulb positioning device (1) as claimed in any of claims 8-14 and a bulb sorting arrangement comprising a bulb inspection device (3) and a bulb discharge device (4) having at least two different discharge positions (d1, d2, d3, d4).
